**Europäisches Patentamt**

**European Patent Office**

**Office européen des brevets**

(19)

(11) Veröffentlichungsnummer: **0 126 246**
A2

# (12) EUROPÄISCHE PATENTANMELDUNG

(21) Anmeldenummer: **84103505.8**

(22) Anmeldetag: **30.03.84**

(51) Int. Cl.³: **G 01 N 27/12**

(30) Priorität: **21.05.83 DE 3318672**

(43) Veröffentlichungstag der Anmeldung: **28.11.84**
**Patentblatt 84/48**

(84) Benannte Vertragsstaaten: **FR GB IT NL**

(71) Anmelder: **Karl Dungs GmbH & Co., D-7067 Urbach (DE)**

(72) Erfinder: **Dungs, Karl, Künkelinstrasse 52,**
**D-7060 Schorndorf (DE)**
Erfinder: **Mattes, Gerd, Dipl.-Ing., Ludwigstrasse 32,**
**D-7060 Schorndorf (DE)**
Erfinder: **Haug, Rudolf, Dipl.-Informatiker, Urbacher**
**Strasse 23/1, D-7060 Schorndorf-Haubersbronn (DE)**

(74) Vertreter: **Patentanwälte Kohler - Schwindling - Späth,**
**Hohentwielstrasse 41, D-7000 Stuttgart 1 (DE)**

(54) Verfahren zur Messung des Sauerstoffpartialdruckes in Gasen.

(57) Zur Messung des Sauerstoffpartialdruckes in Gasen wird eine Pd/PdO-Sonde verwendet, die bei einem in Abhängigkeit von der Temperatur definierten Sauerstoffpartialdruck reversibel oxidiert und dadurch eine sprunghafte Änderung ihres elektrischen Widerstandes erfährt. Zur Bestimmung der Temperatur, bei welcher diese Widerstandsänderung stattfindet, wird ein Widerstandswert vorgegeben, der wenigstens in einem ausgewählten Temperaturbereich zwischen dem Widerstand der oxidierten und dem Widerstand der reduzierten Sonde liegt, und es wird die Temperatur auf einen Wert eingestellt, bei dem der elektrische Widerstand der Sonde dem vorgegebenen Widerstandswert gleich ist. Der ggf. in Abhängigkeit von der Temperatur gewählte, vorgegebene Widerstand bildet eine Regelkurve, die es ermöglicht, die Sondentemperatur zuverlässig auf die Umwandlungstemperatur einzuregeln, die ein genaues Maß für den Sauerstoffpartialdruck in einem die Sonde umspülenden Gasgemisch ist.

EP 0 126 246 A2

0126246

Anmelderin:

Firma
Karl Dungs GmbH & Co.

7067 Urbach

Stuttgart, den 27. März 1984
P 4533 EP S/Lö/Rh

Vertreter:

Patentanwälte
Kohler-Schwindling-Späth
Hohentwielstraße 41

7000 Stuttgart 1

## Verfahren zur Messung des Sauerstoffpartial-druckes in Gasen

Die Erfindung betrifft ein Verfahren zur Messung des Sauerstoffpartialdruckes in Gasen unter Verwendung einer Sonde mit einem Metall/Metalloxid-System, dessen Metall bei einem in Abhängigkeit von der Temperatur definierten Sauerstoffpartialdruck reversibel oxidiert, wodurch die Sonde eine sprunghafte Änderung ihres elektrischen Widerstandes erfährt, bei welchem Verfahren die Sonde beheizt und sowohl die Temperatur als auch der elektrische Widerstand der Sonde gemessen und die gemessenen Werte zur Ermittlung des Sauerstoffpartialdruckes in Beziehung gesetzt werden.

Ein solches Verfahren zur Messung des Sauerstoffpartialdruckes und die dazu verwendete Sonde sind aus der DE-PS 29 16 178 bekannt. Die dort verwendete und auch für das erfindungsgemäße Verfahren geeignete Sonde besitzt eine Palladiumschicht, die bei einem von der Temperatur abhängigen Sauerstoffpartialdruck zu Palladiumoxid oxidiert und bei Unterschreiten dieses Sauerstoffpartialdruckes wieder zu metallischem Palladium reduziert wird.

Obwohl die Oxidation bzw. Reduktion bei einer definierten Temperatur erfolgt und die sich vor und hinter der Sprungtemperatur einstellenden Widerstandswerte der Sonde deutlich voneinander verschieden sind, stößt die Feststellung der Sprungtemperatur auf erhebliche Schwierigkeiten, weil die Oxidation bzw. Reduktion zeitlich nicht schlagartig erfolgt, sondern erhebliche Zeiten in Anspruch nimmt, die Sonde also eine erhebliche Trägheit besitzt. Deshalb macht das aus der DE-PS 29 16 178 bekannte Verfahren, das zur Konstanthaltung des Sauerstoffpartialdruckes und damit des Luftüberschusses im Rauchgas von Feuerungsanlagen dient, von zwei Sonden Gebrauch, die auf zwei unterschiedlichen Temperaturen gehalten werden, bei denen der Widerstandssprung unterhalb bzw. oberhalb des gewünschten Sauerstoffpartialdruckes liegt. Infolgedessen befindet sich die Metallschicht der einen Sonde im oxidierten und

./.

- 3 -

die der anderen Sonde im reduzierten Zustand, wenn sich der Sauerstoffpartialdruck in dem gewünschten Bereich befindet. Außerhalb dieses Bereiches sind entweder beide Sonden reduziert oder beide Sonden oxidiert. Daher zeigen die Widerstandswerte der beiden Sonden an, ob sich der Sauerstoffpartialdruck in dem gewünschten Bereich befindet oder aber größer oder kleiner ist, so daß sich von den Widerstandswerten der Sonden Steuersignale für die Luftzufuhr zu Feuerungsanlagen ableiten lassen.

Die Anwendung dieses bekannten Verfahrens stößt in der Praxis auf erhebliche Schwierigkeiten, die durch das Alterungsverhalten der verwendeten Sonden bedingt sind. Die Oxidations- und Reduktionsvorgänge sind mit wechselnden Dimensionsänderungen der Metall/Metalloxid-Schicht verbunden, die mit der Zeit zu einem Zerreißen der Metallschicht führen. Dadurch wird zwar die Leitfähigkeit der Metall/Metalloxid-Schicht nicht aufgehoben, weil die Risse der Metall/Metalloxid-Schicht durch das diese Schicht tragende Keramikmaterial der Sonde überbrückt wird, das ebenfalls eine gewisse Leitfähigkeit aufweist, jedoch steigt der Sondenwiderstand sehr stark an und wird in zunehmendem Maße durch die Charakteristik des Trägermaterials mit bestimmt. Obwohl der zeitliche Anstieg der Widerstandswerte bei allen diesen Sonden regelmäßig eintritt und trotz dieses Anstieges die Sprungcharakteristik klar erhalten bleibt, ist der zeitliche Verlauf der durch die Alterung bedingten Widerstandserhöhung von Sonde zu Sonde sehr stark verschieden. Insbesondere ist das Alterungsverhalten

./.

solcher Sonden sehr stark unterschiedlich, wenn die Sonden unter unterschiedlichen Bedingungen betrieben werden, wie es bei dem bekannten Verfahren der Fall ist, bei dem nicht nur beide Sonden auf unterschiedlichen Betriebstemperaturen gehalten werden, sondern auch beispielsweise in Abhängigkeit von dem Regelverhalten der Feuerungsanlage eine stark unterschiedliche Anzahl von Zustandswechseln erleiden. Die Folge davon ist, daß der Widerstand der normalerweise reduzierten Sonde den Widerstand der oxidierten Sonde überschreiten kann mit der Folge, daß die Ausgangssignale der Sonden keine Aussage über den herrschenden Betriebszustand mehr liefern. Es ist auch nicht auf einfache Weise möglich, diese Zustandsänderungen der Sonden zu überwachen und zu kompensieren.

Demgemäß liegt der Erfindung die Aufgabe zugrunde, ein Verfahren zur Messung des Sauerstoffpartialdruckes der eingangs genannten Art anzugeben, das eine zuverlässige Messung und damit auch Regelung des Sauerstoffpartialdruckes über lange Zeiträume hinweg mit einfachen Mitteln gestattet, so daß dieses Verfahren insbesondere auch zur Regelung der Verbrennung in einfachen Feuerungsanlagen Verwendung finden kann.

Diese Aufgabe wird nach der Erfindung dadurch gelöst, daß ein Widerstandswert vorgegeben wird, der wenigstens in einem ausgewählten Temperaturbereich zwischen dem Widerstand der oxidierten und dem Widerstand der reduzierten Sonde liegt, und die Temperatur in dem ausgewählten Bereich auf einen Wert eingestellt wird, bei dem der elektrische Widerstand der Sonde dem vorgegebenen Widerstandswert gleich ist.

Bei dem erfindungsgemäßen Verfahren wird nur von einer Sonde Gebrauch gemacht und eindeutig die Temperatur festgestellt, bei welcher der Wechsel zwischen dem oxidierten und reduzierten Zustand der Sonde stattfindet. Diese Temperatur ist unmittelbar ein Maß für den Sauerstoffpartialdruck. Dabei wird die Sprungtemperatur nicht dadurch gemessen, daß durch eine Veränderung der Temperatur der Widerstandswechsel festgestellt wird, was infolge der oben behandelten, zeitlichen Trägheit der Sonde schwierig wäre, sondern es wird gerade diese zeitliche Trägheit in der Weise ausgenutzt, daß die Einstellung eines Gleichgewichtszustandes beobachtet wird, bei dem die Sonde einen elektrischen Widerstand hat, der zwischen den Widerständen bei reduzierter und bei oxidierter Sonde liegt. Die Feststellung dieses Widerstandes erfolgt durch Vergleich mit einem vorgegebenen Widerstand, was die Möglichkeit bietet, die Temperatur durch einen Regelvorgang einzustellen, der auf die Abweichung des elektrischen Widerstandes der Sonde von dem vorgegebenen Widerstand anspricht. Die Größe des vorgegebenen Widerstandes ist dabei nicht kritisch, weil der Widerstandsverlauf bei der Sprungtemperatur extrem steil ist, so daß die Sprungtemperatur mit hoher Genauigkeit ermittelt wird, sofern nur der vorgegebene Widerstand zwischen den Widerständen der oxidierten bzw. reduzierten Sonde liegt.

- 6 -

Ein weiterer Vorteil des erfindungsgemäßen Verfahrens besteht darin, daß die Sonde, insbesondere bei Anwendung eines Regelvorganges, ständig in einem teils oxidierten, teils reduzierten Zustand gehalten wird, bei dem die Sonde sehr schnell durch Zunahme oder Abnahme des Oxidationsgrades und damit ihres Widerstandes reagiert, so daß ein sehr schnelles Ansprechverhalten und eine sehr hohe Genauigkeit der Temperatureinstellung und damit der Messung des Sauerstoffpartialdruckes gewährleistet ist, die ihrerseits wiederum eine sehr schnelle und genaue Regelung einer Feuerungsanlage ermöglicht, im Gegensatz zum bekannten Verfahren, bei dem erst das Überschreiten eines vorgegebenen, relativ breiten Partialdruck-Bereiches festgestellt werden kann. Gleichzeitig wirkt sich das Halten der Sonde in dem genannten Mischzustand in der Weise vorteilhaft aus, daß die Sonde nicht häufige Wechsel vom oxidierten zum reduzierten Zustand und umgekehrt durchläuft, die ein wesentlicher Grund für die Alterung sind, so daß sich die absoluten Widerstandswerte der Sonde nur sehr langsam ändern.

Für die meisten Anwendungen und insbesondere zum Zweck der Regelung der Luftzufuhr bei Feuerungsanlagen wird es genügen, das erfindungsgemäße Verfahren für einen beschränkten Meß- bzw. Regelbereich auszulegen. Es kann dann auch ausreichend sein, einen einzigen, festen Widerstandswert vorzugeben und so zu bestimmen, daß er erst außerhalb des gewünschten Meß- und Regelbereiches die Widerstandskurven des Sondenwiderstandes im reduzierten bzw. oxidierten Zustand schneidet. Es besteht aber auch die Möglichkeit, den vorgegebenen Widerstandswert als Funktion der Sondentemperatur zu variieren, d.h. eine Regelkurve für den
Widerstandswert vorzugeben, der insbesondere so gewählt
werden kann, daß auch unter Berücksichtigung des qualitativ vorhersehbaren Alterungsverhaltens der Sonde über
lange Zeiträume hinweg der temperaturabhängig vorgegebene
Widerstandswert zwischen den beiden Kurven des Sondenwiderstandes bleibt. Endlich sieht eine Ausgestaltung der Erfindung vor, daß der vorgegebene Widerstandswert als Funktion des Alterungszustandes der Sonde variiert wird.

Bei dem erfindungsgemäßen Verfahren ist es nicht nur notwendig, die Sondentemperatur auf einen Wert einzustellen
und ggf. durch einen Regelkreis ständig auf einem Wert zu
halten, bei dem der Sondenwiderstand gleich dem vorgegebenen Widerstandswert ist, sondern es ist auch eine sehr
genaue Messung der Sondentemperatur erforderlich, weil
die Sondentemperatur unmittelbar ein Maß für den herrschenden und zu messenden Sauerstoffpartialdruck ist. In
Anbetracht der hohen Sondentemperatur, die bei Verwendung
einer Palladium/Palladiumoxid-Sonde im Bereich zwischen
700 und 800°C liegt, wird bei einer bevorzugten Ausführungsform des erfindungsgemäßen Verfahrens die Sondentemperatur mittels eines Thermoelementes gemessen. Da die
vom Thermoelement gelieferte Spannung eine Funktion der
Temperaturdifferenz zwischen der Meßstelle und einer Vergleichsstelle ist, muß auch die Temperatur der Vergleichsstelle entweder auf einem bekannten Wert konstant gehalten
oder aber genau gemessen werden. Vorzugsweise wird bei
dem erfindungsgemäßen Verfahren die Temperatur der Ver-

./.

gleichsstelle des Thermoelementes mittels eines Thermofühlers überwacht. Auf diese Weise läßt sich durch Gegeneinanderschalten der Ausgangsspannungen von Thermoelement und Thermofühler ein Signal erzielen, das ein sehr genaues Maß für die herrschende Temperatur ist. Außerdem lassen sich durch eine Korrektur des so gewonnenen Signales leicht zeitliche Änderungen des Ansprechverhaltens von Thermoelement und/oder Thermofühler kompensieren. Eine Ausgestaltung des erfindungsgemäßen Verfahrens sieht vor, daß die Sonde zu diesem Zweck natürlicher Luft ausgesetzt, der Sondenwiderstand auf den vorgegebenen Widerstandswert eingestellt und die dazu erforderliche Temperatur als Eichpunkt für die Temperaturmessung verwendet wird. Bei Verwendung einer Palladium/Palladiumoxid-Sonde beträgt die Temperatur des Widerstandssprunges bei dem in natürlicher Luft herrschenden Sauerstoffpartialdruck genau 800°C. Die Auswertungsschaltung für die von dem Thermoelement und dem Thermofühler gelieferten Signalspannungen läßt sich ohne weiteres so einstellen, daß beim Eichen mit natürlicher Luft diese Temperatur angezeigt wird, mit der Folge, daß die im Betriebsfall darunterliegenden Temperaturen ebenfalls mit sehr hoher Genauigkeit ermittelt werden.

Eine Messung mit natürlicher Luft kann auch dazu verwendet werden, den vorgegebenen Widerstandswert als Funktion des Alterungszustandes der Sonde zu verändern. Wenn die Sonde natürlicher Luft ausgesetzt ist, können durch Variation der Sondentemperatur die Sondenwiderstände zu beiden Seiten der sprunghaften Änderung gemessen werden.

./.

- 9 -

Diese beiden Meßwerte lassen ohne weiteres erkennen, inwieweit sich der Sondenwiderstand durch Alterungsprozesse erhöht hat, und es kann der vorgegebene Widerstandswert auf einen zwischen den beiden gemessenen Sondenwiderständen liegenden Wert eingestellt werden. Darunter ist auch zu verstehen, daß bei Vorgabe einer Regelkurve in Form eines temperaturabhängigen Verlaufes des vorgegebenen Widerstandes die Regelkurve so gelegt wird, daß sie durch einen Widerstandswert geht, der sich zwischen den beiden gemessenen Sondenwiderständen befindet. Im übrigen kann der Verlauf der Regelkurve in Abhängigkeit von diesem Widerstandswert in einer Weise geändert werden, die den sich aus den gemessenen Widerständen ergebenden, qualitativ bekannten Verlauf der Widerstandkurven der Sonde berücksichtigt.

Wie eingangs erwähnt, hat die Alterung der Sonde eine Erhöhung ihres Widerstandes zur Folge. Auch wenn die im Laufe der Zeit eintretende Widerstandserhöhung sehr beträchtlich ist, bleibt die qualitative Abhängigkeit wenigstens des Widerstandes der oxidierten Sonde von der Temperatur erhalten, so daß im wesentlichen eine proportionale Änderung der Widerstandswerte stattfindet. Hierauf beruht eine weitere, besonders vorteilhafte Möglichkeit der Berücksichtigung der Sondenalterung im Rahmen des erfindungsgemäßen Verfahrens.

Die Bestimmung des Sondenwiderstandes erfolgt zweckmäßigerweise dadurch, daß durch die Sonde ein Meßstrom geschickt und der dem Sondenwiderstand proportionale Spannungsabfall an der Sonde gemessen wird. Bei Anwendung dieses Meßverfahrens besteht in weiterer Ausgestaltung der Erfindung die Möglichkeit, infolge der proportionalen Veränderungen, die der Sondenwiderstand durch Alterungserscheinungen erfährt, in weiterer Ausgestaltung der Erfindung den Spannungsabfall an der Sonde zum Ausgleich von Alterungserscheinungen in einem vorgegebenen Bereich zu halten, was am einfachsten mit Hilfe eines vorgeschalteten Widerstandsnetzwerkes möglich ist. Insbesondere kann zur Einstellung des Spannungsabfalles auf den vorgegebenen Bereich die Sonde wiederum natürlicher Luft ausgesetzt und auf eine vorgegebene Temperatur aufgeheizt werden, bei der sie oxydiert ist, und dann der Spannungsabfall an die in diesem Zustand gehaltene Sonde mittels eines vorgeschalteten Netzwerkes auf einem vorgegebenen Wert eingestellt werden. Dieser Wert liegt notwendigerweise etwas über dem der gleichen Temperatur zugeordneten, vorgegebenen Widerstandswert, auf den die Sonde zur Ermittlung der Umschlagtemperatur eingestellt wird.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 bis 7     Diagramme zur Erläuterung des erfindungsgemäßen Verfahrens und

Fig. 8     das Blockschaltbild einer Schaltungsanordnung zur Durchführung des erfindungsgemäßen Verfahrens.

- 11 -

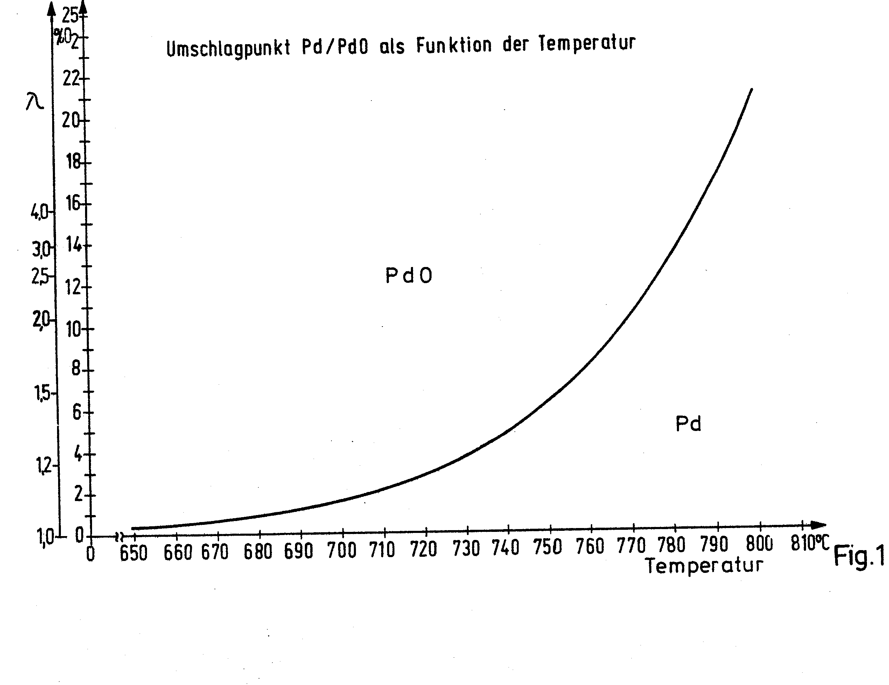

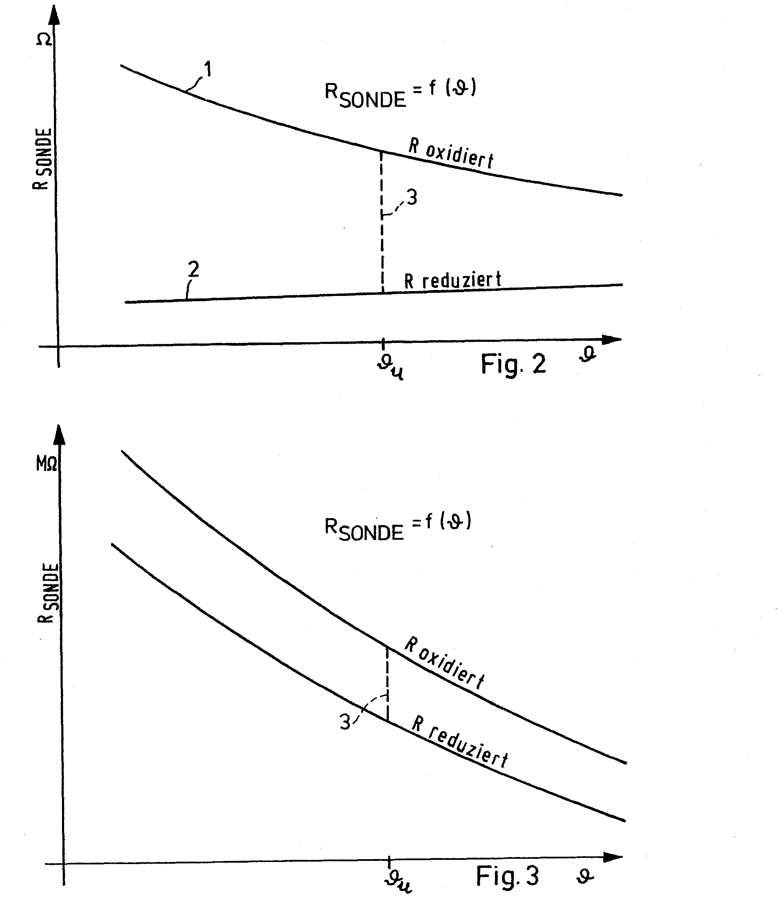

Bei dem als Ausführungsbeispiel erläuterten Verfahren findet eine Palladium/Palladiumoxid-Sonde (Pd/PdO-Sonde) Verwendung, bei der eine reversible Umwandlung von Palladiumoxid in Palladium als Funktion des Sauerstoffanteils im umgebenden Gasgemisch und der Temperatur der Pd/PdO-Meßsonde stattfindet. Die Abhängigkeit zwischen Umwandlungstemperatur und Sauerstoffanteil des Gasgemisches ist für den Temperaturbereich von 650 bis 800°C in Fig. 1 veranschaulicht. Da Palladium und Palladiumoxid unterschiedliche spezifische Widerstände besitzen, findet in dem jeweiligen Umwandlungspunkt eine sprunghafte Änderung des Sondenwiderstandes statt. Fig. 2 veranschaulicht qualitativ den Widerstand R einer neuen Sonde als Funktion der Temperatur $\vartheta$ im oxidierten Zustand (Kurve 1) und in reduziertem Zustand (Kurve 2). Bei der durch Fig. 1 definierten Umwandlungstemperatur $\vartheta_u$ findet ein sprunghafter Übergang 3 zwischen den Widerstandswerten im oxidierten und im reduzierten Zustand statt. Durch Alterung der Sonde verändern sich deren Widerstände im oxidierten und reduzierten Zustand in Richtung auf höhere Widerstandswerte, wie es Fig. 3 zeigt, in der die Kurve 1' wiederum den Widerstand der oxidierten Sonde und die Kurve 2' den Widerstand der reduzierten Sonde als Funktion der Temperatur $\vartheta$ angibt. Der sprunghafte Wechsel 3' bei der Umwandlungstemperatur $\vartheta_u$ zwischen den Widerstandswerten bleibt jedoch davon unberührt.

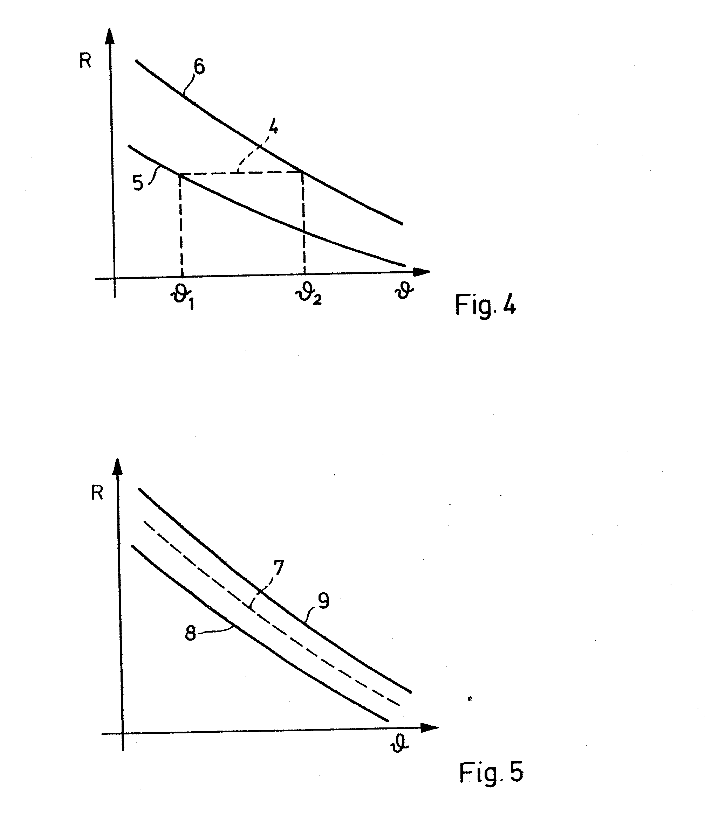

Nach der Erfindung wird ein Widerstandswert vorgegeben, der in einem interessierenden Bereich, in dem eine Messung des Sauerstoffgehaltes eines Gasgemisches stattfinden

./.

soll, zwischen den Widerständen der Sonde im oxidierten
und im reduzierten Zustand liegt. Wie Fig. 4 zeigt, kann
es sich dabei um einen konstanten Widerstand handeln, der
durch die Kurve 4 veranschaulicht ist. Der Meßbereich ist
dadurch auf den Bereich zwischen den Temperaturen $\vartheta_1$
und $\vartheta_2$ beschränkt, bei denen die Kurve 4 die Kurve 5,
welche den Widerstand der Sonde im reduzierten Zustand angibt, bzw. die Kurve 6, welche den Widerstand der Sonde
im oxidierten Zustand angibt, schneidet. Es besteht aber
auch die Möglichkeit, den vorgegebenen Widerstand als
Funktion der Temperatur zu ändern, wie es in Fig. 5 die
Kurve 7 veranschaulicht, die im wesentlichen in der Mitte
zwischen den Kurven 8 und 9 verläuft, die wiederum die
Sondenwiderstände im oxidierten bzw. reduzierten Zustand
als Funktion der Temperatur wiedergeben. Es versteht sich,
daß es viele andere Möglichkeiten gibt, den vorgewählten
Widerstand als Funktion der Temperatur zu wählen, und zwar
sowohl im Hinblick auf das gewünschte Regelverhalten als
auch auf den Aufwand, der zur Erzeugung der gewünschten
Temperaturabhängigkeit getrieben werden muß.

Wird die Sondentemperatur so eingestellt, daß der Sondenwiderstand dem vorgegebenen Widerstandswert gleich ist,
ist die Metallschicht weder vollständig oxidiert noch
vollständig reduziert, sondern es herrscht ein Zwischenzustand, der durch einen Punkt auf den Übergang von dem
Widerstand bei vollständig oxidierter zum Widerstand bei
vollständig reduzierter Sonde gekennzeichnet ist. Da dieser Übergang bei einer definierten Umwandlungstemperatur stattfindet, ist die zum Einhalten des vorgegebenen Widerstandswertes erforderliche Temperatur genau gleich der Umwandlungstemperatur, die ihrerseits wiederum gemäß Fig. 1 ein genaues Maß für den Sauerstoffpartialdruck in dem Gasgemisch ist, dem die Sonde ausgesetzt ist. Infolgedessen erlaubt das erfindungsgemäße Verfahren eine sehr genaue Einstellung der Umwandlungstemperatur und damit der Messung des Sauerstoffpartialdruckes.

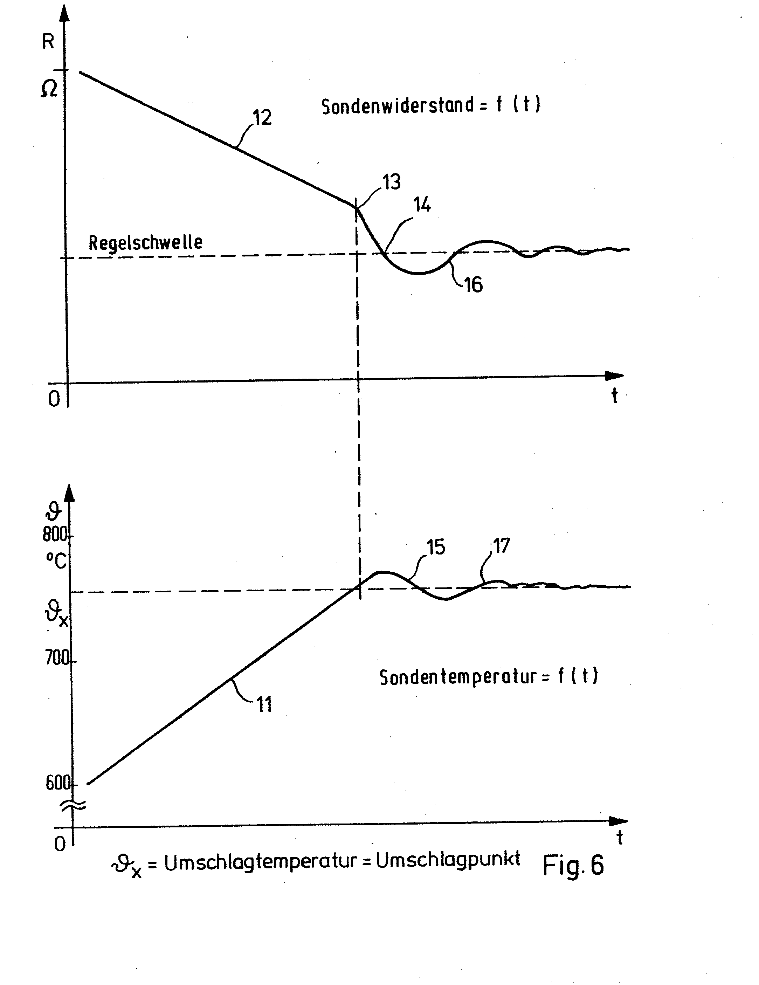

Zum Einstellen der Umwandlungstemperatur wird ein Regelvorgang benutzt, der auf die Differenz zwischen dem Sondenwiderstand und dem vorgegebenen Widerstandswert anspricht. Fig. 6 veranschaulicht den Vorgang des Einregelns auf die Umschlagtemperatur bei der Inbetriebnahme einer Sonde. Wie das Diagramm nach Fig. 1 erkennen läßt, ist bei niedrigen Temperaturen die Sonde im oxidierten Zustand und hat daher einen hohen Widerstand. Wird die Sonde aufgeheizt, sinkt der Widerstand gemäß Fig. 4 bzw. 5 gemäß seiner Temperaturcharakteristik ab, bis die Umschlagtemperatur $\vartheta_x$ erreicht ist. Den zeitlichen Verlauf der Sondentemperatur $\vartheta$ und des Sondenwiderstandes R zeigen die Äste 11 bzw. 12 der in Fig. 6 dargestellten Kurven. Überschreitet die Sondentemperatur die Umschlagtemperatur $\vartheta_x$, so wird das Palladiumoxid der Sonde reduziert, und es sinkt der Sondenwiderstand stärker ab, so daß sich im zeitlichen Verlauf des Sondenwiderstandes R ein Knick 13 zeigt. Der Sondenwiderstand erreicht dann sehr schnell den vorgegebenen Widerstandswert, der in Fig. 6 als "Regelschwelle" bezeichnet ist (Punkt 14). Das Überschreiten der Regelschwelle hat ein Reduzieren der der Sonde zugeführten Heizleistung zur Folge, so daß die Sondentemperatur wieder abnimmt, wie es der Abschnitt 15 der Temperaturkurve veranschaulicht. Infolgedessen nimmt die Oxidation der Sonde und damit deren Widerstand wieder zu (Abschnitt 16 der Widerstandskurve), so daß wiederum die Regelschwelle überschritten und dadurch eine Erhöhung der Sondentemperatur eingeleitet wird (Abschnitt 17 der Temperaturkurve). Bei entsprechend ausgelegtem Regelkreis findet auf diese Weise ein gedämpftes Einschwingen auf den vorgegebenen Widerstandswert statt, dem eine definierte Umschlagstemperatur entspricht, welche den herrschenden Sauerstoffpartialdruck im Gas angibt.

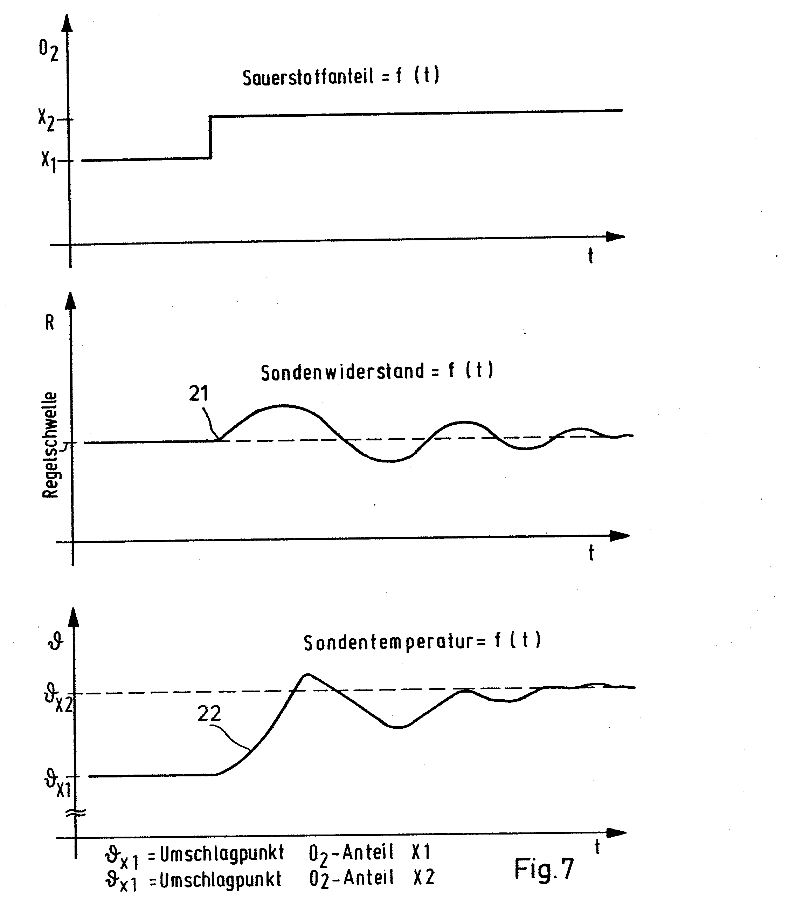

Ändert sich der Sauerstoffpartialdruck in dem die Sonde umgebenden Gasgemisch, tritt bei der herrschenden Temperatur entweder wieder eine vollständige Oxidation oder eine vollständige Reduktion in Verbindung mit einer entsprechenden Widerstandsänderung statt. Nimmt der Sauerstoffanteil ab, so wird die Sonde stärker reduziert, so daß auch ihr Widerstand abnimmt. Da dadurch sofort der vorgegebene Widerstand unterschritten wird, tritt der gleiche Regelvorgang ein wie im Punkt 14 der Fig. 6, durch den sich die Sonde auf die dem neuen Sauerstoffpartialdruck entsprechende Umschlagtemperatur einstellt. Bei einer Erhöhung des Sauerstoffanteils tritt der umgekehrte Vorgang ein, wie er in Fig. 7 veranschaulicht ist. Eine Erhöhung des Sauerstoffanteiles vom Wert X1 auf den Wert X2 hat eine zunehmende Oxidation der Sonde und damit eine Erhöhung des Sondenwiderstandes R über die Regelschwelle zur Folge (Punkt 21). Diese Überschreitung der Regelschwelle hat eine Erhöhung der Sondentemperatur vom Wert
$\vartheta_{x1}$ zur Folge (Kurvenabschnitt 22). Die Erhöhung der
Sondentemperatur führt gemäß Fig. 1 wieder zu einer Reduzierung der Sonde und damit zu einer Abnahme des Sondenwiderstandes. Wie in Fig. 7 dargestellt, findet auf diese
Weise wiederum ein Einschwingen auf die Regelschwelle
statt, jedoch bei einer anderen Sondentemperatur $\vartheta_{x2}$ ,
die dem neuen, erhöhten Sauerstoffanteil entspricht.

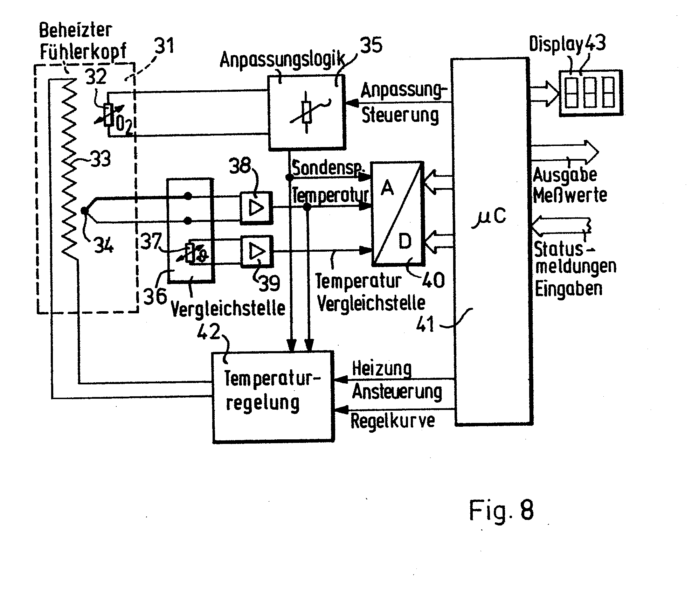

Das erfindungsgemäße Verfahren läßt sich besonders vorteilhaft mit der in Fig. 8 schematisch dargestellten Schaltungsanordnung durchführen. Diese Schaltungsanordnung umfaßt einen beheizten Fühlerkopf 31, der eine als variablen Widerstand dargestellte Pd/PdO-Sonde 32, eine Sondenheizung 33 und ein Thermoelement 34 enthält. Das Thermoelement 34 und die Pd/PdO-Sonde liegen räumlich eng beieinander, um eine genaue Erfassung der Sondentemperatur
zu gewährleisten. Die Pd/PdO-Sonde ist an eine Anpassungslogik 35 angeschlossen, die ein steuerbares Widerstandsnetzwerk enthält, das es erlaubt, die Pd/PdO-Sonde trotz
Alterung an den Meßbereich der nachfolgenden Stufen anzupassen. Zu diesem Zweck kann die Sonde natürlicher Luft
ausgesetzt und auf eine vorgegebene Temperatur, beispielsweise 700°C, aufgeheizt werden, bei der die Sonde
oxidiert ist. Das Widerstandsnetzwerk wird dann so eingestellt, daß der Spannungsabfall an der von einem Meßstrom durchflossenen Pd/PdO-Sonde, der dem Sondenwiderstand proportional ist, einen vorgegebenen Wert hat.

Dieser Vorgang kann leicht automatisch in gewissen Zeitabständen widerholt werden, um für eine laufende Anpassung der Pd/PdO-Sonde an den Meßbereich der nachfolgenden Stufen zu sorgen.

Da die Genauigkeit der Messung des Sauerstoffpartialdruckes vor allem von der Genauigkeit der Temperaturmessung abhängt und die vom Thermoelement 34 erzeugte Thermospannung von der Temperaturdifferenz zwischen der Meßstelle und einer Vergleichsstelle 36 abhängt, enthält die dargestellte Schaltungsanordnung ein Thermoelement 37 zum Messen der Temperatur der Vergleichsstelle. Die Ausgangsspannungen des Thermoelementes 34 und des Temperaturfühlers 37 werden über Verstärker 38, 39 sowie über einen Analog/Digital-Wandler 40 einem Mikroprozessor 41 zugeführt, in dem die Spannungswerte addiert werden. Eine Temperaturregelung 42 hält die dem Sondenwiderstand entsprechende Sondenspannung durch Regeln der Sondentemperatur auf dem vorgegebenen Widerstandswert, der eine Funktion der Temperatur sein und daher eine Regelkurve bilden kann. Die Vorgabe der Regelkurve und die Freigabe der Sondenheizung erfolgt vom Mikroprozessor 41 aus. Bei Ausfall der Regelung verhindert ein nicht näher dargestellter Übertemperaturschutz das Überheizen des Fühlerkopfes 31.

Der Mikroprozessor 41, dem vom Analog/Digital-Wandler 40 außer den o.g. Temperaturwerten auch in Form der Sondenspannung dem Sondenwiderstand entsprechende Werte zugeführt werden, ist zur Erfüllung der folgenden Aufgaben ausgelegt:

Selbstüberwachung,

Überprüfen der Peripherie auf Funktion

Freigabe und Regelung der Sondenheizung

Festlegung der Regelkurve

Anpassen der Meßsonde an den Meßverstärker durch Steuern der Anpassungslogik

Ausgabe von Meßwerten und Meldungen

Plausibilitätsprüfung der Meßwerte

Ermitteln der absoluten Sondentemperatur

Ein mit dem Mikroprozessor 41 gekoppeltes Display 43 dient zur Anzeige von Meldungen und/oder Meßwerten. Statt einer Angabe der Sondentemperatur kann unmittelbar eine Anzeige des entsprechenden Sauerstoffpartialdruckes oder aber auch, insbesondere bei der Überwachung von Rauchgasen, des Luftüberschusses erfolgen.

Nicht näher dargestellte Ausgabe- und Eingabeschnittstellen können dazu verwendet werden, Meldungen und Meßwerte an externe Geräte zu vermitteln oder externe Meldungen und Befehle dem Mikroprozessor zuzuführen. Insbesondere kann die Ausgabeschnittstelle Meldeleitungen enthalten, die angeben, ob der Meßwert größer, kleiner oder gleich einer festgesetzten Stelle oder auch unterhalb, innerhalb oder oberhalb eines festgelegten Bereiches ist. Über die Eingabeschnittstelle kann von außen die Art des anzuzeigenden Meßwertes sowie auch ein gewünschter Meßbereich ausgewählt werden. Weiterhin können an den Mikroprozessor die Statusmeldungen externer Geräte übermittelt werden.

Wie bereits erwähnt und wie auch die vorstehende Beschreibung deutlich macht, hängt die Genauigkeit der Bestimmung des Sauerstoffpartialdruckes von der Genauigkeit der Temperaturmessung ab. Da auch Thermoelement und Temperaturfühler Alterungsprozessen unterliegen, die zu einer Änderung ihrer Charakteristik führen, könnten sich hierdurch Fehler bei der Temperaturmessung einschalten. Die dargestellte Schaltungsanordnung erlaubt eine entsprechende Korrektur der Meßwerte. Zu diesem Zweck wird die bekannte Umwandlungstemperatur für Luft (20,95% Sauerstoff) von
800°C benutzt. Wird demnach die Pd/PdO-Sonde von Luft
umspült, so regelt sich die Sondentemperatur auf 800°C
ein, und es wird der von Thermoelement und Thermofühler
gelieferte Wert der Temperatur von 800°C gleichgesetzt.
Die übrigen Temperaturmessungen werden entsprechend korrigiert.

Ähnlich kann auch die Alterung der Pd/PdO-Sonde, die sich
in einer Erhöhung des Sondenwiderstandes ausdrückt, durch
eine Messung des Sondenwiderstandes ermittelt werden, während die Sonde natürlicher Luft ausgesetzt ist. Durch Variation der Sondentemperatur lassen sich die Sondenwiderstände der oxidierten und der reduzierten Sonde in der
Umgebung der Umschlagtemperatur feststellen. In Abhängigkeit von diesen Meßwerten bewirkt der Mikroprozessor 41
eine Veränderung der Anpassungslogik in der Weise, daß
die Regelkurve den eingetretenen Änderungen des Sondenwiderstandes angepaßt wird.

Patentansprüche

1. Verfahren zur Messung des Sauerstoffpartialdrucks in Gasen unter Verwendung einer Sonde mit einem Metall/ Metalloxid-System, dessen Metall bei einem in Abhängigkeit von der Temperatur definierten Sauerstoffpartialdruck reversibel oxidiert, wodurch die Sonde eine sprunghafte Änderung ihres elektrischen Widerstandes erfährt, bei welchem Verfahren die Sonde beheizt und sowohl die Temperatur als auch der elektrische Widerstand der Sonde gemessen und die gemessenen Werte zur Ermittlung des Sauerstoffpartialdruckes in Beziehung gesetzt werden, dadurch gekennzeichnet, daß ein Widerstandswert vorgegeben wird, der wenigstens in einem ausgewählten Temperaturbereich zwischen dem Widerstand der oxidierten und dem Widerstand der reduzierten Sonde liegt, und die Temperatur in dem ausgewählten Bereich auf einen Wert eingestellt wird, bei dem der elektrische Widerstand der Sonde dem vorgegebenen Widerstandswert gleich ist.

2. Verfahren nach Anspruch 1, dadurch gekennzeichnet, daß der vorgegebene Widerstandswert als Funktion der Sondentemperatur variiert wird.

3. Verfahren nach Anspruch 1 oder 2, dadurch gekennzeichnet, daß der elektrische Widerstand der Sonde durch Verändern der Sondentemperatur ständig auf den vorgegebenen Widerstandswert eingeregelt wird.

4. Verfahren nach einem der vorhergehenden Ansprüche, dadurch gekennzeichnet, daß die Sondentemperatur mittels eines Thermoelementes gemessen und die Temperatur der Vergleichsstelle des Thermoelementes mittels eines Thermofühlers überwacht wird.

5. Verfahren nach einem der vorhergehenden Ansprüche, dadurch gekennzeichnet, daß die Sonde natürlicher Luft ausgesetzt, der Sondenwiderstand auf den vorgegebenen Widerstandswert eingestellt und die dazu erforderliche Temperatur als Eichpunkt für die Temperaturmessung verwendet wird.

6. Verfahren nach einem der vorhergehenden Ansprüche, dadurch gekennzeichnet, daß der vorgegebene Widerstandswert als Funktion des Alterungszustandes der Sonde variiert wird.

7. Verfahren nach Anspruch 6, dadurch gekennzeichnet, daß die Sonde natürlicher Luft ausgesetzt, durch Variation der Sondentemperatur die Sondenwiderstände zu beiden Seiten der sprunghaften Änderung gemessen und der vorgegebene Widerstandswert auf einen zwischen den beiden gemessenen Sondenwiderständen liegenden Wert eingestellt wird.

8. Verfahren nach einem der Ansprüche 1 bis 5, dadurch gekennzeichnet, daß zum Bestimmen des Sondenwiderstands durch die Sonde ein Meßstrom geschickt und der dem Sondenwiderstand proportionale Spannungsabfall an der Sonde gemessen und dieser Spannungsabfall zum Ausgleich von Alterserscheinungen in einem vorgegebenen Bereich gehalten wird.

9. Verfahren nach Anspruch 8, dadurch gekennzeichnet, daß die Sonde natürlicher Luft ausgesetzt und auf eine vorgegebene Temperatur aufgeheizt wird, bei der die Sonde oxidiert ist, und der Spannungsabfall an der in diesem Zustand gehaltenen Sonde mittels eines vorgeschalteten Widerstandsnetzwerks auf einen vorgegebenen Wert eingestellt wird.

Fig.1

$R_{SONDE} = f(\vartheta)$

R oxidiert

R reduziert

$\vartheta_u$    Fig. 2

$R_{SONDE} = f(\vartheta)$

R oxidiert

R reduziert

$\vartheta_u$    Fig. 3

Fig. 4

Fig. 5

4/6

0126246

Sondenwiderstand = f ( t )

Regelschwelle

Sondentemperatur = f ( t )

$\vartheta_x$ = Umschlagtemperatur = Umschlagpunkt     Fig. 6

Sauerstoffanteil = f ( t )

Sondenwiderstand = f ( t )

21

Sondentemperatur = f ( t )

22

$\vartheta_{x1}$ = Umschlagpunkt    $O_2$-Anteil    X1
$\vartheta_{x1}$ = Umschlagpunkt    $O_2$-Anteil    X2

Fig.7

0126246

**Beheizter Fühlerkopf** 31

32

$O_2$ 33

34 37 36 **Vergleichstelle** 39 38

**Anpassungslogik** 35

Sondensp.
Temperatur
A
D
40
Temperatur
Vergleichstelle
41

42 **Temperatur-regelung**

Anpassung-Steuerung

μC

Heizung
Ansteuerung
Regelkurve

**Display 43**

Ausgabe
Meßwerte

Status-meldungen
Eingaben

Fig. 8